# EUROPÄISCHE PATENTSCHRIFT

(11) **EP 1 085 291 B1**
(45) Veröffentlichungstag und Bekanntmachung des Hinweises auf die Patenterteilung: **11.11.2009**
(21) Anmeldenummer: 00119051.1
(22) Anmeldetag: 02.09.2000
(51) Int. Cl.: G01B 5/00, G01B 11/30, G01D 5/347, G01D 5/38

(54) **Vorrichtung zur Positionsbestimmung und Ermittlung von Führungsfehlern**
Device for determination of positions and faults in guidance
Dispsitif pour la détermination de positions et de défaults de translation

(30) Priorität: 16.09.1999 DE 19944395
(43) Veröffentlichungstag der Anmeldung: 21.03.2001
(73) Patentinhaber: Dr. Johannes Heidenhain GmbH, 83292 Traunreut (DE)
(72) Erfinder: Spanner, Erwin, 83278 Traunstein (DE)

(56) Entgegenhaltungen:
- EP-A- 0 082 441
- EP-A- 0 387 520
- DE-A- 4 303 161
- US-A- 4 758 720
- US-A- 5 061 073

## Beschreibung

Die vorliegende Erfindung betrifft eine Vorrichtung zur Positionsbestimmung und Ermittlung von Führungsfehlern.

An modernen Präzisions-Werkzeugmaschinen oder Koordinatenmeßgeräten besteht mitunter die Forderung, neben der exakten Bestimmung der Position entlang einer Maschinenachse auch die eventuell vorliegenden Führungsfehler der jeweiligen Achse zu erfassen. Die meßtechnische Ermittlung von einem der verschiedenen Führungsfehler wird auch als Geradheitsmessung bezeichnet. Aus den gemessenen Führungsfehlern kann dann in einer geeigneten Auswerteeinrichtung der jeweilige Positions-Meßwert im Betrieb rechnerisch korrigiert werden.

In der EP 0 082 441 A1 wird diese Problematik ausführlich diskutiert. Die Figuren 3 und 4 dieser Druckschrift zeigen ferner eine geeignete Vorrichtung, die es ermöglicht sowohl über eine hochauflösende Inkrementalmessung die jeweilige Position entlang einer Achse zu bestimmen als auch die oben erwähnte Ermittlung von Führungsfehlern bzw. auch die Geradheitsmessung durchzuführen. Hierzu ist ein Maßstab vorgesehen, der neben einer Positions-Meßteilung in Form einer herkömmlichen Inkrementalteilung in Meßrichtung auch eine senkrecht dazu angeordnete Führungsfehler-Meßteilung umfaßt. Die Führungsfehler-Meßteilung besteht aus Teilungsstrichen, die parallel zur Meßrichtung orientiert sind und sich über den Eckbereich eines Trägerkörpers mit quadratischem Querschnitt erstrecken. Zur Abtastung der verschiedenen Meßteilungen sind photoelektrische Meßsysteme erwähnt, auf die jedoch nicht weiter eingegangen wird.

Eine weitere Vorrichtung zur gleichzeitigen Positions- und Führungsfehlermessung ist aus der EP 0 660 085 A1 bekannt. Hierbei wird eine Maßverkörperung mit Hilfe einer CCD-Zeile abgetastet, wobei die Maßverkörperung mehrere Spuren umfaßt. Symmetrisch benachbart zu einer mittleren nichtperiodischen Strichcode-Struktur sind zwei Spuren mit Strichen angeordnet, die parallel zur Meßrichtung orientiert sind. Die Abtastung der letztgenannten beiden Spuren, die senkrecht zur eigentlichen Meßrichtung ausgerichtet sind, ermöglicht wiederum die Erfassung von eventuellen Führüngsfehlern bzw. die Geradheitsmessung. Die absolute Positionsbestimmung erfolgt hierbei jedoch mit einer relativ groben Auflösung; für Hochpräzisionsanwendungen ist diese Vorrichtung daher nicht geeignet.

Aus der US 5,061,073 ist eine optische Positionsmesseinrichtung bekannt, bei der neben einer sich in Messrichtung erstreckenden inkrementalen Messteilung seitlich benachbarte Umfeldteilungen angeordnet sind. Die seitlich benachbarten Umfeldteilungen sind bezüglich ihrer Teilungsorientierung senkrecht zur Messrichtung angeordnet und besitzen eine Teilungsperiode, die von der Teilungsperiode der Messteilung abweicht. An bestimmten Absolutpositionen entlang der Messstrecke sind in den Umfeldteilungen Referenzmarken angeordnet. Hinweise dahingehend, wie eine derartige Positionsmesseinrichtung abgewandelt werden kann, um darüber Führungsfehler zu ermitteln, lassen sich dieser Druckschrift jedoch nicht entnehmen.

Aufgabe der vorliegenden Erfindung ist es, eine Vorrichtung zur Positionsbestimmung und Ermittlung von Führungsfehlern anzugeben, die ausgehend von einer herkömmlichen hochauflösenden Positonsmeßeinrichtung möglichst wenige Modifikationen erfordert, um auch eine hochpräzise Ermittlung von Führungsfehlern entlang mindestens einer vorgegebenen Achse vorzunehmen.

Diese Aufgabe wird gelöst durch eine Vorrichtung mit den Merkmalen des Anspruches 1.

Vorteilhafte Ausführungsformen der erfindungsgemäßen Vorrichtung ergeben sich aus den Maßnahmen, die in den abhängigen Ansprüchen aufgeführt sind.

Erfindungsgemäß wurde nunmehr eine hochauflösende Positionsmeßeinrichtung, wie sie z.B. aus der EP 0 387 520 B1 bekannt ist, dahingehend modifiziert, daß auch eine gleichzeitige Ermittlung von Führungsfehlern damit möglich ist. Auf Seiten des Maßstabes der erfindungsgemäßen Vorrichtung sind benachbart zu einer üblichen Positions-Meßteilung in Form einer Inkrementalteilung mindestens zwei Führungsfehler-Meßteilungen angeordnet, die jeweils senkrecht zur Positions-Meßteilung orientiert sind. Zur Abtastung der verschiedenen Meßteilungen sind vorzugsweise zwei identisch ausgebildete Abtasteinheiten vorgesehen, die lediglich um 90° verdreht zueinander anzuordnen sind. Eine der beiden Abtasteinheiten dient als Positionsbestimmungs-Abtasteinheit, die in bekannter Art und Weise die Positions-Meßteilung in Meßrichtung zur Erzeugung von Positions-Metßsignalen abtastet. Die zweite Abtasteinheit fungiert als Führungsfehler-Abtasteinheit tastet zur Erzeugung von Führungsfehler-Meßsignalen die FührungsfehlerMeßteilungen ab. Die Führungsfehler-Abtasteinheit ist zusammen mit der Positionsbestimmungs-Abtasteinheit entlang der Meßrichtung gegenüber dem Maßstab beweglich.

Im Vergleich zur bekannten Positionsmeßeinrichtung aus der EP 0 387 520 B1 ist demnach lediglich die zusätzliche Anordnung der beiden Führungsfehler-Meßteilungen auf dem Maßstab sowie eine zweite ― identische ― Abtasteinheit erforderlich, um nunmehr in einer Vorrichtung sowohl die Positionsbestimmung als auch die Ermittlung der Führungsfehler zu bewerkstelligen.

Sowohl die Erzeugung der Positions-Meßsignale als auch die Erzeugung der Führungsfehler-Meßsignale basiert auf einem interferentiellen Abtastprinzip, d.h. es ist für beide Messungen jeweils eine entsprechend hohe Auflösung bzw. Präzision sichergestellt.

Desweiteren erweist sich die Anordnung der Positions-Meßteilung und der beiden Führungsfehler-Meßteilungen auf dem Maßstab als äußerst platzsparend, d.h. es sind auch auf Seiten des Maßstabes keine großen Bauvolumina erforderlich.

Die erfindungsgemäße Vorrichtung läßt sich ferner in vielfältiger Form modifizieren bzw. erweitern; beispielsweise durch Hinzufügen weiterer Abtasteinheiten zur Erfassung weiterer Führungsfehler oder Nutzung alternativer Abtastprinzipien etc...

Weitere Vorteile sowie Einzelheiten der vorliegenden Erfindung ergeben sich aus der nachfolgenden Beschreibung mehrerer Ausführungsbeispiele anhand der beiliegenden Zeichnungen.

Dabei zeigt
- Figur 1: eine schematisierte Draufsicht auf eine erste Ausführungsform der erfindungsgemäßen Vorrichtung;
- Figur 2: eine perspektivische Ansicht des Maßstabes und von Teilen der Führungsfehler-Abtasteinheit des Beispiels aus Figur 1;
- Figur 3: den Strahlengang zur Führungsfehlermessung in einem zweiten Ausführungsbeispiel der erfindungsgemäßen Vorrichtung.

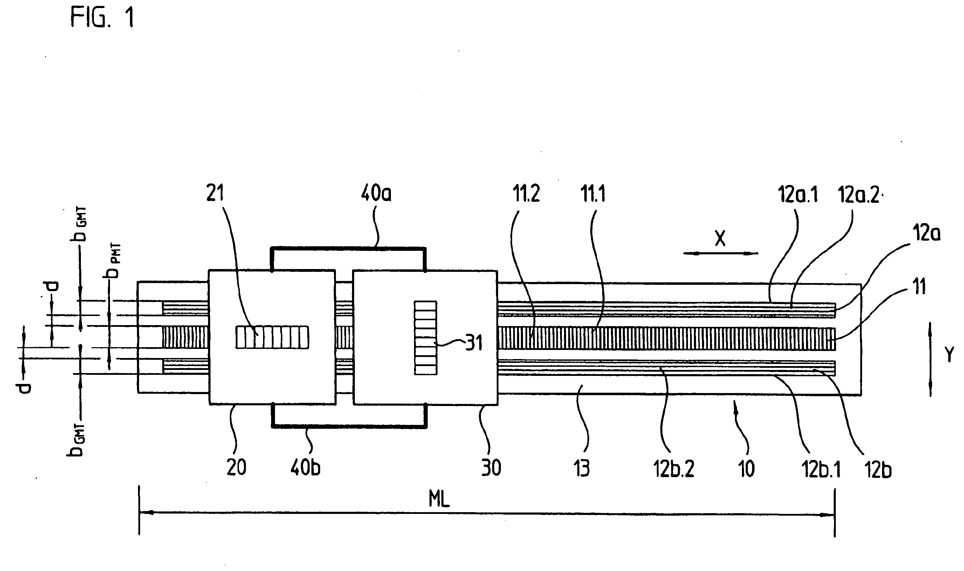

In Figur 1 ist ein erstes Ausführungsbeispiel der erfindungsgemäßen Vorrichtung in einer Draufsicht schematisch dargestellt. Hierbei sind insbesondere auf Seiten der jeweiligen Abtasteinheiten 20, 30 aus Gründen der besseren Übersichtlichkeit nicht alle Elemente gezeigt.

Wie in Figur 1 erkennbar, umfaßt die erfindungsgemäße Vorrichtung zur Positionsbestimmung und Ermittlung von Führungsfehlern einen Maßstab 10 sowie zwei gegenüber dem Maßstab 10 in einer Meßrichtung x bewegliche Abtasteinheiten 20, 30. In der Praxis ist hierbei der Maßstab 10 gegenüber den beiden Abtasteinheiten 20, 30 beweglich angeordnet; wesentlich ist jedoch lediglich die mögliche Relativbewegung von Maßstab 10 und Abtasteinheiten 20, 30. Die beiden Abtasteinheiten 20, 30 seien nachfolgend als Positionsbestimmungs-Abtasteinheit 20 bzw. Führungsfehler-Abtasteinheit 30 bezeichnet. Beide Abtasteinheiten 20, 30 sind zusammen miteinander gegenüber dem Maßstab 10 beweglich ― oder umgekehrt - und hierzu etwa in einem ― nicht dargestellten - Gehäuse angeordnet. Grundsätzlich kann die gemeinsame Beweglichkeit der beiden Abtasteinheiten 20, 30 gegenüber dem Maßstab 10 selbstverständlich auch anderweitig hergestellt werden, etwa durch geeignete mechanische Kopplungselemente etc.. In Figur 1 sei die zwangsweise gemeinsame Bewegung der beiden Abtasteinheiten 20, 30 durch die Kopplungselemente 40a, 40b schematisch angedeutet.

Der Maßstab 10 und die beiden Abtasteinheiten 20, 30 sind beispielsweise mit Maschinenkomponenten verbunden, die relativ zueinander in Meßrichtung x beweglich sind. Neben der hochpräzisen Relativposition sollen auch die maschinenseitigen Führungsfehler entlang der jeweiligen Meßlänge ML über die erfindungsgemäße Vorrichtung bestimmt werden. Die von den beiden Abtasteinheiten 20, 30 im Fall der Relativbewegung zum Maßstab 20 erzeugten Positions- und Führungsfehler-Meßsignale werden zur Weiterverarbeitung einer ― nicht dargestellten ― Auswerteeinheit zugeführt. Auf die konkrete Auswertung bzw. Weiterverarbeitung der erzeugten Signale sei an dieser Stelle nicht weiter eingegangen, sondern z.B. lediglich auf die bereits oben erwähnte EP 0 082 441 A1 verwiesen.

Der Maßstab 10 der erfindungsgemäßen Vorrichtung ist in dieser Ausführungsform als Reflexions-Maßstab ausgebildet, d.h. die verschiedenen darauf angeordneten Meßteilungen 11, 12a, 12b sind jeweils als bekannte Reflexions-Meßteilungen in Form von Reflexions-Phasenteilungen ausgebildet. Derartige Reflexions-Meßteilungen bestehen aus in der jeweiligen Meßrichtung x alternierend angeordneten Teilbereichen 11.1, 11.2, 12a.1, 12a.2, 12b.1, 12b.2 mit unterschiedlichen Stufenhöhen. Im Fall der Reflexions-Phasenteilung handelt es sich etwa um periodisch angeordnete strichförmige, reflektierende Teilbereiche 11.1, 12a.1, 12b.1 bzw. Striche aus Gold, die auf einer reflektierenden Oberfläche angeordnet sind, z.B. ebenfalls Gold. Die zwischen den Strichen angeordneten Teilbereiche 11.2 12a.2, 12b.2 seien nachfolgend als Lücken bezeichnet.

Auf dem Maßstab 10 der erfindungsgemäßen Vorrichtung ist im dargestellten Ausführungsbeispiel auf der Oberseite eines Trägerelementes 13 mittig eine Positions-Meßteilung 11 vorgesehen, bestehend aus periodisch in Meßrichtung x angeordneten, hochreflektierenden Strichen 11.1 und Lücken 11.2. Die Längsrichtung der Striche 11.1 bzw. Lücken 11.2 ist hierbei senkrecht zur Meßrichtung x orientiert, die entsprechende Richtung sei als y-Richtung definiert. Die Länge der Striche 11.1 entspricht der Breite b_{PMT} der Spur mit der Positions-Meßteilung 11. Die Teilungsperiode der Positions-Meßteilung 11 wird mit TP_{PMT} bezeichnet.

Beidseitig benachbart zur Positions-Meßteilung 11 sind in der dargestellten Ausführungsform der erfindungsgmäßen Vorrichtung zwei Führungsfehler-Meßteilungen 12a, 12b auf dem Trägerelement 13 des Maßstabes 10 vorgesehen. Die Führungsfehler-Meßteilungen 12a, 12b sind hierbei senkrecht zur Positions-Meßteilung 11 angeordnet. Dies bedeutet, daß sich die Striche 12a.1, 12a.2 bzw. Stege und Lücken 12a.2, 12b.2 der beiden Führungsfehler-Meßteilungen 12a, 12b parallel zur Meßrichtung x über die gesamte Meßlänge ML erstrecken. Die Breite der beiden Spuren mit den Führungsfehler-Meßteilungen 12a, 12b ist identisch gewählt und wird nachfolgend mit b_{GMT} bezeichnet; der Abstand der beiden Spuren mit den Führungsfehler-Meßteilungen 12a, 12b zur mittigen Spur mit der Positions-Meßteilung 11 sei jeweils mit d bezeichnet. Beide Führungsfehler-Meßteilungen 12a, 12b weisen die gleiche Teilungsperiode TP_{GMT} auf. Grundsätzlich könnten die beiden Führungsfehler-Meßteilungen 12a, 12b auch unmittelbar anschließend an die mittige Positions-Meßteilung 11 angeordnet werden, d.h. d = 0 gewählt werden.

In einer bevorzugten Ausführungsform sind die Teilungsperioden TP_{MT}, TP_{GMT} der verschiedenen Meßteilungen 11, 12a, 12b allesamt identisch ausgebildet.

Die Erzeugung der Abtastsignale mit Hilfe der beiden Abtasteinheiten 20, 30 basiert jeweils auf einem interferentiellen Wirkungsprinzip, wie es beispielsweise in der EP 0 387 520 B1 der Anmelderin ausführlich beschrieben ist. Ein entsprechendes Meßsystem wird von der Anmelderin unter der Produktbezeichnung LIP 382 vertrieben. In Bezug auf die Signalerzeugung sei an dieser Stelle deshalb lediglich auf die oben erwähnte Druckschrift verwiesen.

Von den verschiedenen Komponenten der Abtasteinheiten 20, 30 sind in Figur 1 aus Gründen der besseren Übersichtlichkeit lediglich die jeweiligen Abtastteilungen 21, 31 dargestellt. Aus der gezeigten Orientierung der Abtastteilungen 21, 31 relativ zu den verschiedenen Teilungen 11, 12a, 12b auf dem Maßstab 10 ist ersichtlich, daß die linke Abtasteinheit 20 zur Abtastung der Positions-Teitung 11 dient. Die Abtastteilung 21 der Positionsbestimmungs-Abtasteinheit 20 ist zu diesem Zweck identisch zur Positions-Meßteilung 11 auf dem Maßstab 10 orientiert. Im Fall der Relativbewegung in Meßrichtung x werden demzufolge über die Positionsbestimmungs-Abtasteinheit 20 periodisch modulierte Inkrementalsignale mit der Signalperiode TP_{PMT}/4 erzeugt, die in bekannter Art und Weise weiterverarbeitet werden können. Die derart erzeugten Positions-Meßsignale dienen demnach zur präzisen Bestimmung der Relativposition der Abtasteinheit 20 gegenüber dem Maßstab 10 in Meßrichtung x und ist demzufolge identisch zur bekannten Variante aus der EP 0 387 520 B1.
Im Fall der Verwendung des oben genannten LIP 382-Systemes liegt eine Teilungsperiode TP_{MT} = 0.512µm und eine resultierende Signalperiode der inkrementalen Positions-Meßsignale von von 0.128µm vor.

In Meßrichtung x etwas versetzt und senkrecht zur Positionsbestimmungs-Abtasteinheit 20 ist die Führungsfehler-Abtasteinheit 30 angeordnet. Entsprechend um 90° gegenüber der Abtastteilung 21 der Positionsbestimmungs-Abtasteinheit 20 verdreht, d.h. in y-Richtung, ist demzufolge auch die Abtastteilung 31 dieser Abtasteinheit 30 angeordnet, d.h. identisch zur Orientierung der beiden Führungsfehler-Meßteilungen 12a, 12b auf dem Maßstab 10. Resultiert im Fall der Bewegung in Meßrichtung x nunmehr aufgrund eventueller Führungsfehler auch eine Relativbewegung in y-Richtung, d.h. senkrecht zur Meßrichtung x, so wird diese Bewegung mit Hilfe der Führungsfehler-Abtasteinheit 30 präzise bestimmt. Die Führungsfehler-Meßsignale stellen im Fall der eventuellen Relativbewegung in y-Richtung ebenfalls periodisch modulierte Inkrementalsignale dar, die aufgrund der Abtastung der beiden Führungsfehler-Meßteilungen 12a, 12b die Signalperiode TP_{GMT}/4 aufweisen. Auch diese Signale werden in bekannter Art und Weise von der oben erwähnten Auswerteeinheit weiterverarbeitet. Wenn wie oben erwähnt die Teilungperioden aller beteiligten Meßteilungen 11, 12a, 12b identisch gewählt werden, liegt im Fall der Verwendung des LIP 382-Systemes und TP_{GMT} = 0.512µm eine Signalperiode der inkrementalen Führungsfehler-Meßsignale von 0.128µm vor.

Durch eine entsprechende Dimensionierung der Breiten b_{GMT}, b_{PMT} der verschiedenen Teilungsspuren 11, 12a, 12b sowie der Abstände d auf dem Maßstab 10 läßt sich nunmehr sicherstellen, daß zwei identisch ausgebildete Abtasteinheiten 20, 30, die auf dem bekannten Prinzip aus der EP 0 387 520 B1 basieren, einsetzbar sind. Diese müssen lediglich um 90° verdreht zueinander angeordnet werden. Daneben sind nur zusätzlich die beiden Führungsfehler-Meßteilungen 12a, 12b auf dem Maßstab 10 erforderlich. Ohne großen Mehraufwand läßt sich somit das bekannte Meßsystem aus der EP 0 387 520 B1 zur erfindungsgemäßen Vorrichtung umfunktionieren.

Alternativ zur Anordnung von zwei separaten Führungsfehler-Abtasteinheiten 20, 30 gemäß dem oben erläuterten Beispiel läßt sich die erfindungsgemäße Vorrichtung auch abwandeln. So ist es z.B. auch möglich die optische Funktion der beiden Abtasteinheiten in einer einzigen Abtasteinheit zu integrieren, die gegenüber dem Maßstab beweglich ist oder umgekehrt. In diesem Fall ließe sich insbesondere ein noch kompakteres System auf der Abtastseite realisieren.

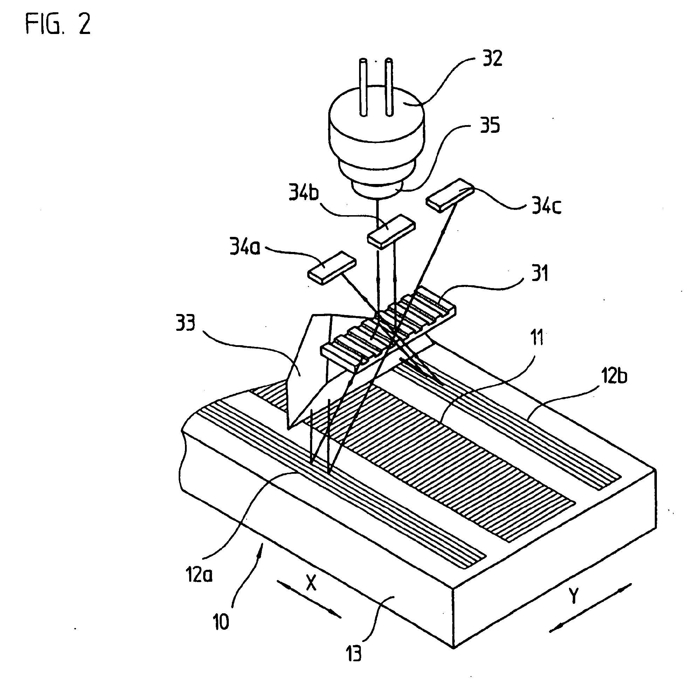

In Figur 2 ist eine weitere schematische Teildarstellung der erfindungsgemäßen Vorrichtung in einer perspektivischen Ansicht gezeigt. Dargestellt sind hierbei lediglich einige der Komponenten der Führungsfehler-Abtasteinheit 30 aus Figur 1, um die räumliche Orientierung der verschiedenen Komponenten bzw. den Abtaststrahlengang bei der Führungsfehlermessung besser zu veranschaulichen. Die in Figur 2 nicht gezeigte Positionsbestimmungs-Abtasteinheit umfaßt wie vorher erläutert die identischen Komponenten, die allerdings um 90° verdreht zu den dargestellten Komponenten in Figur 2 angeordnet sind.

Die jeweiligen Abtasteinheiten umfassen demzufolge eine Lichtquelle 32, eine Kollimatoroptik 35, ein Abtastgitter 31, eine Retroreflexions-Baueinheit 33 sowie mehrere Detektorelemente 34a, 34b, 34c. Die von der Lichtquelle 32 emittierten Strahlenbündel werden mit Hilfe der Kollimatoroptik 35 zunächst kollimiert, ehe diese auf die als Transmissionsteilung ausgebildete Abtastteilung 31 gelangen. Dort erfolgt eine Aufspaltung der einfallenden Strahlenbündel in mehrere Teilstrahlenbündel verschiedener Beugungsordnungen. Zumindest zwei Beugungsordnungen, vorzugsweise die +/- 1. Ordnungen, treffen anschließend auf die Führungsfehler-Meßteilungen 12a, 12b, werden dort erneut gebeugt und in Richtung der Retroreflexions-Baueinheit 33 reflektiert. Der Mittenabstand der beiden Führungsfehler-Meßteilungen 12a, 12b ist in diesem Ausführungsbeispiel demnach so zu wählen, daß er dem Abstand der auf den Maßstab auftreffenden Beugungsordnungen entspricht. Die optische Auslegung der Retroreflexions-Baueinheit 33 gewährleistet, daß die einfallenden Teilstrahlenbündel wieder in Richtung der beiden Führungsfehler-Meßteilungen 12a, 12b reflektiert werden. Die Retroreflexionsbaueinheit 33 ist als geeignet dimensioniertes Tripelprisma oder als eine optisch entsprechende Tripelspiegel-Anordnung ausgebildet; bzgl. weiterer Details sei in diesem Zusammenhang auf die EP 0 387 520 B1 verwiesen. Nach der erneuten Reflexion an den beiden Führungsfehler-Meßteilungen 12a, 12b treffen die verschiedenen Teilstrahlenbündel schließlich erneut auf die Abtastteilung 31, die letztlich die Paare interferierender Teilstrahlenbündel in verschiedenen Raumrichtungen zu den insgesamt drei Detektorelementen 34a, 34b, 34c hin ablenkt. An den drei Detektorelementen 34a, 34b, 34c liegen im Fall der Relativbewegung der Führungsfehler-Abtasteinheit 30 gegenüber dem Maßstab 10 in y-Richtung ausgangsseitig dann schließlich periodisch modulierte Inkrementalsignale. Zwischen den Signalen an den drei Detektorelementen 34a, 34b, 34c liegt hierbei ein Phasenversatz von 120° vor.

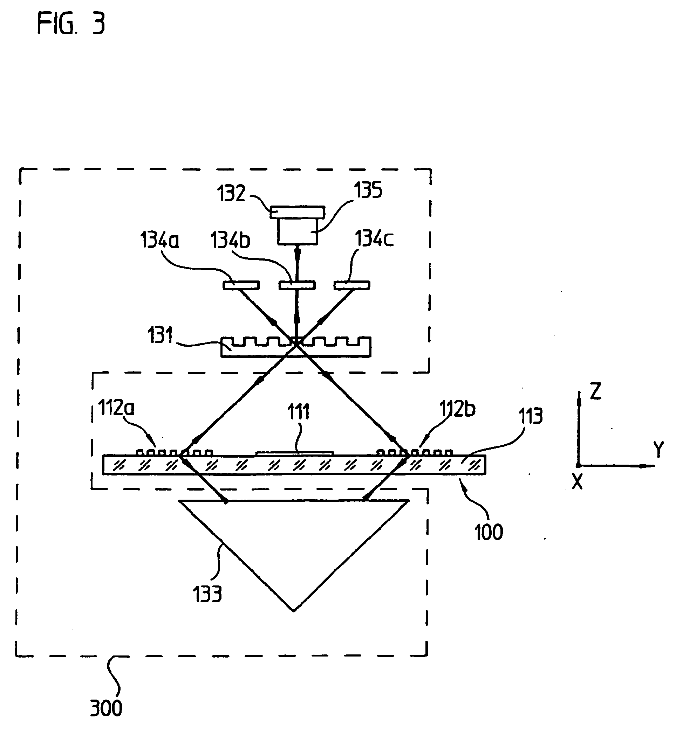

Ein zweites Ausführungsbeispiel der erfindungsgemäßen Vorrichtung sei nachfolgend anhand von Figur 3 erläutert. Während das erste beschriebene Ausführungsbeispiel als Auflicht-System ausgelegt war, sei anhand von Figur 3 veranschaulicht, daß die erfindungsgemäße Vorrichtung selbstverständlich auch als Durchlicht-System ausgebildet werden kann. Figur 3 zeigt hierbei eine Schnittdarstellung des Maßstabes 100 und der Führungsfehler-Abtasteinheit 300 in der y-z-Ebene, um inbesondere den Abtaststrahlengang der Führungsfehler- bzw. in diesem Fall der Geradheitsmessung zu erläutern. Maßstab 100 und Abtasteinheit 300 sind in Meßrichtung x zueinander beweglich angeordnet. In Bezug auf die - nicht dargestellte - Anordnung der Positionsbestimmungs-Abtasteinheit sei etwa auf die Figur 2 in der EP 0 387 520 B1 verwiesen, die die Verhältnisse im Abtaststrahlengang zur Positionsmessung in der x-z-Ebene zeigt.

Auf Seiten des Maßstabes 100 sind wiederum auf einem nunmehr transparenten Trägerelement 113 eine mittig angeordnete Positions-Meßteilung 111 sowie beidseitig benachbarte Führungsfehler-Meßteilungen 112a, 112b vorgesehen. Die jeweiligen Teilungen 111, 112a, 112b sind nunmehr im Durchlicht-System als Transmissions-Teilungen, vorzugsweise als Phasen-Transmissionsteilungen, ausgebildet. Wie etwa im Schnitt der beiden Führungsfehler-Meßteilungen erkennbar, bestehen diese aus periodisch angeordneten Stegen und Lücken in der jeweiligen Meßrichtung, wobei Stege und Lükken unterschiedliche Stufenhöhen aufweisen.

Die Führungsfehler-Abtasteinheit 300 umfaßt wie im vorhergenden Ausführungsbeispiel eine Lichtquelle 132, eine Kollimatoroptik 135, eine Abtastteilung 131, eine als Tripelprisma ausgebildete Retroreflexions-Baueinheit 133 sowie drei optoelektronische Detektorelemente 134a, 134b, 134c. Die aus der Lichtquelle 132 austretenden und von der Kollimatoroptik 135 parallel gerichteten Strahlenbündel gelangen zunächst wiederum auf die Abtastteilung 131, wo diese in verschiedene Teilstrahlenbündel gebeugt bzw. aufgespalten werden. Anschließend treffen die gebeugten Teilstrahlenbündel auf die jeweiligen Führungsfehler-Meßteilungen 112a, 112b auf dem Maßstab 100 und werden von diesen nunmehr in Transmission nochmals gebeugt. Nach Rückreflexion durch die Retroreflexions-Baueinheit 133 durchlaufen die Teilstrahlenbündel wiederum die beiden Führungsfehler-Meßteilungen 112a, 112b, ehe in der Ebene der Abtastteilung 131 schließlich interferenzfähige Paare von Teilstrahlenbündeln vorliegen. Mit Hilfe der Abtastteilung 131 erfolgt schließlich eine Ablenkung der jeweils interferierenden Teilstrahlenbündel in Richtung der Detektorelemente 134a, 134b, 134c, wo im Fall der Relativbewegung von Maßstab 100 und Führungsfehler-Abtasteinheit 300 in y-Richtung phasenverschobene Inkrementalsignale anliegen.

Neben dieser zweiten Ausführungsform der erfindungsgemäßen Vorrichtung sind selbstverständlich auch noch weitere Alternativen im Rahmen der vorliegenden Erfindung realisierbar. So wäre es beispielsweise möglich, auch das aus der EP 0 311 144 B1 bekannte Abtastprinzip auf Seiten der jeweiligen Abtasteinheiten einzusetzen, um die verschiedenen Abtastsignale zu erzeugen. Auch in diesem Fall wäre lediglich eine zweite, identische Abtasteinheit erforderlich, die um 90° verdreht zur üblichen Abtasteinheit angeordnet wird und die beiden ebenfalls zusätzlichen Führungsfehler-Meßteilungen abtastet, die benachbart zur Positions-Meßteilung auf dem Maßstab anzuordnen wären.

Auch andere bekannte Abtastprinzipien lassen sich mit geringfügigen Modifikationen entsprechend anpassen und im Rahmen der vorliegenden Erfindung einsetzen.

Desweiteren läßt sich die erfindungsgemäße Vorrichtung selbstverständlich dahigehend abwandeln, daß damit auch weitere Führungsfehler erfaßt werden können, beispielsweise Führungsfehler, die auf Drehungen um bestimmte Achsen beruhen. Hierzu sind dann entsprechend zusätzliche Führungsfehler-Abtasteinheiten bzw. Führungsfehler-Meßteilungen vorzusehen wie dies etwa in den Figuren 3 und 5 der bereits oben erwähnten EP 0 082 441 vorgeschlagen wurde usw..

## Patentansprüche

1. Vorrichtung zur Positionsbestimmung und Ermittlung von Führungsfehlern, bestehend aus
- einem Maßstab (10; 100) mit einer in Positions-Meßrichtung (x) angeordneten Positions-Meßteilung (11; 111) sowie beidseitig benachbart zur Positions-Meßteilung (11; 111) angeordneten Führungsfehler-Meßteilungen (12a, 12b; 112a, 112b), die senkrecht zur Positions-Meßteilung (11; 111) angeordnet sind und wobei die Positions-Meßteilung.(11; 111) sowie die Führungsfehler-Messtellungen (12a, 12b; 112a, 112b) auf einer Oberseite eines gemeinsamen Trägerelements (13; 113) angeordnet sind,
- einer Positionsbestimmungs-Abtasteinheit (20), wobei diese und der Maßstab (10; 100) relativ zueinander beweglich angeordnet sind und die Positionsbestimmungs-Abtasteinheit (20) dazu ausgelegt ist, zur Erzeugung von Positions-Meßsignalen die Positions-Meßteilung (11; 111) abzutasten sowie
- mindestens einer Führungsfehler-Abtasteinheit (30; 300), wobei jeweils eine Führungsfehler-Abtasteinheit (30; 300) zusammen mit der Positionsbestimmungs-Abtasteinheit (20) relativ gegenüber dem Maßstab (10; 100) beweglich angeordnet ist und zur Erzeugung von Fühnrngsfehler-Meßsignalen die Führungsfehler-Abtasteinheit (30; 300) dazu ausgelegt ist, die zwei Führungsfehler-Meßteilungen (12a, 12b; 112a, 112b) abzutasten, um im Fall der Relativbewegung des Maßstabs (10; 100) und der Führungsfehler-Abtasteinheit (30; 300) in einer Richtung (y) senkrecht zur Messrichtung (x) periodisch modulierte Inkrementalsignale zu erzeugen,

2. Vorrichtung nach Anspruch 1, wobei die beiden Führungsfehler-Meßteilungen (12a, 12b; 112a, 112b) jeweils die identische Teilungsperiode wie die Positions-Meßteilung (11; 111) aufweisen und sich über die gesamte Meßlänge (ML) erstrecken.

3. Vorrichtung nach Anspruch 1, wobei die die Positions-Meßteilung (11) sowie die Führungsfehler-Meßteilungen (12a, 12b) jeweils als Reflexions-Meßteilungen ausgebildet sind.

4. Vorrichtung nach Anspruch 1, wobei die Positionsbestimmungs-Abtasteinheit (20) und die Führungsfehler-Abtasteinheit (30; 300) identisch ausgebildet und senkrecht zueinander angeordnet sind.

5. Vorrichtung nach Anspruch 1, wobei die Positionsbestimmungs-Abtasteinheit (20) und/oder die Führungsfehler-Abtasteinheit (30; 300) eine Lichtquelle (32; 132), eine Abtastteilung (21, 31; 131), eine Retroreflexions-Baueinheit (33; 133) sowie mehrere Detektorelemente (34a, 34b, 34c; 134a, 134b, 134c) umfassen.

6. Vorrichtung nach Anspruch 3 und 5, wobei die Führungsfehler-Abtasteinheit (20) derart ausgebildet und in Bezug auf die beiden Führungsfehler-Meßteilungen (12a, 12b) derart angeordnet ist, daß die von der Lichtquelle (32) emittierten Strahlenbündel zunächst die Abtastteilung (31) durchlaufen, anschließend auf die Führungsfehler-Meßteilungen (12a, 12b) auftreffen und von dort in Richtung der Retroreflexions-Baueinheit (33) zurückreflektiert werden, die die einfallenden Strahlenbündel in Richtung der Führungsfehler-Meßteilungen (12a, 12b) zurückreflektiert, von wo wiederum eine Reflexion in Richtung der Abtastteilung (31) erfolgt, ehe die Strahlenbündel auf die Detektorelemente (34a, 34b, 34c) auftreffen.

7. Vorrichtung nach Anspruch 6, wobei die jeweiligen Breiten der beiden Führungsfehter-Meßteitungen (12a, 12b) und der Positionsbestimmungs-Meßteitung (11) senkrecht zur Positions-Meßrichtung (x) derart dimensioniert sind, daß identisch ausgebildete Positionsbestimmungs-Abtasteinheiten (20) und Führungsfehler-Abtasteinheiten (30) verwendbar sind.

8. Vorrichtung nach Anspruch 6, wobei die Positionsbestimmungs-Abtasteinheit und die Führungsfehler-Abtasteinheit in einem gemeinsamen Gehäuse angeordnet sind, welches gegenüber dem Maßstab beweglich in der Positions-Meßrichtung angeordnet ist.

## Claims

1. A device for determining the position and for detecting guide errors, consisting of
- a scale (10; 100) comprising a position measuring grating (11; 111) arranged in position measuring direction (x) as well as guide error measuring gratings (12a, 12b; 112a, 112b) arranged on both sides adjacent to the position measuring grating (11; 111), which are arranged at right angles to the position measuring grating (11; 111) and wherein the position measuring grating (11; 111) as well as the guide error measuring gratings (12a, 12b; 112a, 112b) are arranged on an upper side of a common support element (13; 113),
- a position determination scanning unit (20), wherein said unit and the scale (10; 100) are arranged so as to be movable relative to one another and the position determination scanning unit (20) is designed to scan the position measuring grating (11; 111) for the purpose of generating position measuring signals as well as
- at least one guide error scanning unit (30; 300), wherein a guide error scanning unit (30; 300) is in each case arranged together with the position determination scanning unit (20) so as to be movable relative opposite to the scale (10; 100) and, for the purpose of generating guide error measuring signals, the guide error scanning unit (30; 300) is designed to scan the two guide error measuring gratings (12a, 12b; 112a, 112b) so as to generate periodically modulated incremental signals in the event of the relative movement of the scale (10; 100) and of the guide error scanning unit (30; 300) in a direction (y) at right angles to the measuring direction (x).

2. The device according to claim 1, wherein the two guide error measuring gratings (12a, 12b; 112a, 112b) in each case encompass the identical grating period as the position measuring grating (11; 111) and extend across the entire measuring length (ML).

3. The device according to claim 1, wherein the position measuring grating (11) as well as the guide error measuring gratings (12a, 12b) are in each case embodied as reflection measuring gratings.

4. The device according to claim 1, wherein the position determination scanning unit (20) and the guide error scanning unit (30; 300) are embodied identically and are arranged at right angles to one another.

5. The device according to claim 1, wherein the position determination scanning unit (20) and/or the guide error scanning unit (30; 300) comprise a light source (32; 132), a scanning grating (21, 31; 131), a retro-reflection assembly (33; 133) as well as a plurality of detector elements (34a, 34b, 34c; 134a, 134b, 134c).

6. The device according to claim 3 and 5, wherein the guide error scanning unit (20) is embodied in such a manner and is arranged in relation to the two guide error measuring gratings (12a, 12b) in such a manner that the beams of rays emitted by the light source (32) initially pass through the scanning grating (31), subsequently impact the guide error measuring gratings (12a, 12b) and are reflected back from there in the direction of the retro-reflection assembly (33), which reflects the incident beams of rays back in the direction of the guide error measuring gratings (12a, 12b) from where a reflection takes place in turn in the direction of the scanning grating (31) before the beams of rays impact the detector elements (34a, 34b, 34c).

7. The device according to claim 6, wherein the respective widths of the two guide error measuring gratings (12a, 12b) and of the position determination measuring grating (11) at right angles to the position measuring direction (x) are dimensioned in such a manner that identically embodied position determination scanning units (20) and guide error scanning units (30) can be used.

8. The device according to claim 6, wherein the position determination scanning unit and the guide error scanning unit are arranged in a common housing, which is arranged in the position measuring direction opposite to the scale.

## Revendications

1. Dispositif de détermination de position et de détection d'erreurs de guidage, constitué de
- une règle (10 ;100) comportant une graduation de mesure de position (11 ;111) disposée dans la direction de mesure de position (x) ainsi que des graduations de mesure d'erreurs de guidage (12a,12b ; 112a,112b) disposées des deux côtés à côté de la graduation de mesure de position (11 ;111), lesquelles sont disposées perpendiculairement à la direction de mesure de position (11 ; 111) et dans lequel la graduation de mesure de position (11 ;111) ainsi que les graduations de mesure d'erreurs de guidage (12a,12b ;112a,112b) sont disposées sur un côté supérieur d'un élément de support commun (13 ;113) ;
- une unité de balayage pour la détermination de position (20), dans lequel celle-ci et la règle (10 ;100) sont disposées de manière mobile l'une par rapport à l'autre et l'unité de balayage pour la détermination de position (20) est conçue de manière à balayer la graduation de mesure de position (11 ;111) pour générer des signaux de mesure de position, ainsi que
- au moins une unité de balayage pour erreurs de guidage (30 ;300), dans lequel respectivement une unité de balayage pour erreurs de guidage (30 ;300) est disposée conjointement à l'unité de balayage pour la détermination de position (20) de manière mobile par rapport à la règle (10 ;100) et, afin de générer des signaux de mesure d'erreurs de guidage, l'unité de balayage d'erreurs de guidage (30 ;300) est conçue de manière à balayer les deux graduations de mesure d'erreurs de guidage (12a, 12b; 112a, 112b), et en cas de mouvement relatif de la règle (10 ;100) et de l'unité de balayage pour erreurs de guidage (30 ;300) dans une direction (y) perpendiculaire à la direction de mesure (x), générer des signaux incrémentiels modulés périodiquement.

2. Dispositif selon la revendication 1, dans lequel les deux graduations de mesure pour erreurs de guidage (12a,12b ;112a,112b) présentent respectivement la période de graduation identique à la graduation de mesure de position (11 ;111) et s'étendent sur la totalité de la longueur de mesure (ML).

3. Dispositif selon la revendication 1, dans lequel la graduation de mesure de position (11) ainsi que les graduations de mesure pour erreurs de guidage (12a,12b) sont respectivement configurées comme des graduations de mesure par réflexion.

4. Dispositif selon la revendication 1, dans lequel l'unité de balayage pour la détermination de position (20) et l'unité de balayage pour erreurs de guidage (30 ;300) ont une configuration identique et sont disposées perpendiculairement l'une à l'autre.

5. Dispositif selon la revendication 1, dans lequel l'unité de balayage pour la détermination de position (20) et /ou l'unité de balayage pour erreurs de guidage (30 ;300) comprennent une source de lumière (32 ;132), une graduation de balayage (21 ,31 ;131), un module de rétro-réflexion (33 ;133) ainsi que plusieurs éléments détecteurs (34a,34b,34c ;134a,134b,134c).

6. Dispositif selon la revendication 3 et 5, dans lequel l'unité de balayage pour erreurs de guidage (20) est configurée de telle sorte et disposée par rapport aux deux graduations de mesure d'erreurs de guidage (12a,12b) de telle sorte que le faisceau de rayons émis par la source de lumière (32) parcoure d'abord la graduation de balayage (31), atteigne ensuite les graduations de mesure pour erreurs de guidage (12a,12b) et soit rétro-réfléchie de là dans la direction du module de rétro-réflexion (33), qui rétro-réfléchit le faisceau de rayons incident dans la direction des graduations de mesure d'erreurs de guidage (12a,12b), d'où à nouveau une réflexion dans la direction de la graduation de balayage (31) a lieu, avant que le faisceau de rayons atteigne les éléments détecteurs (34a,34b,34c).

7. Dispositif selon la revendication 6, dans lequel les largeurs respectives des deux graduations de mesure pour erreurs de guidage (12a,12b) et la graduation de mesure pour la détermination de position (11) sont dimensionnées perpendiculairement à la direction de mesure de position (x) de telle sorte que des unités de balayage pour la détermination de position (20) et des unités de balayage pour erreurs de guidage (30) configurées identiquement soient utilisées.

8. Dispositif selon la revendication 6, dans lequel l'unité de balayage pour la détermination de position et l'unité de balayage pour erreurs de guidage sont disposées dans un logement commun, lequel est disposé de manière mobile par rapport à la règle dans la direction de mesure de position.
